# EUROPEAN PATENT APPLICATION

(11) **EP 4 817 995 A1**
(43) Date of publication of application: **07.10.2026**
(21) Application number: 26167741.3
(22) Date of filing: 25.03.2026
(51) Int. Cl.: B62B 9/00

(54) **WHEEL ORIENTATION MECHANISM AND WHEELED CARRIER**

(30) Priority: 25.03.2025 CN 202510362409
(71) Applicant: Wonderland Switzerland AG, 6312 Steinhausen (CH)
(72) Inventor: WANG, Erxue, Dongguan, Guangdong, 523648 (CN); FANG, Liwu, Dongguan, Guangdong, 523648 (CN)
(74) Representative: Flentje, Hanno Alexander Peter

(57) **Abstract**

Disclosed are a wheel orientation mechanism and a wheeled carrier having the wheel orientation mechanism. The wheeled carrier includes a frame having a mounting base, and a wheel assembly having a wheel seat. The wheel seat is pivotally connected to the mounting base. The wheel orientation mechanism is configured to selectively restrict or allow rotation of the wheel seat relative to the mounting base. The wheel orientation mechanism includes: a locking mechanism including: a locking assembly switchable between a locking state where the rotation of the wheel seat relative to the mounting base is restricted and an unlocking state where the rotation of the wheel seat relative to the mounting base is allowed; and a driving mechanism including a power unit and a driving assembly, the driving mechanism being configured to drive the locking assembly to switch the locking assembly between the locking state and the unlocking state.

## Description

### TECHNICAL FIELD

The present disclosure relates to a wheeled carrier, and in particular, to a wheeled carrier having a wheel orientation mechanism.

### BACKGROUND

A wheeled carrier such as a baby stroller, a pet stroller, or a trolley generally includes a frame having a mounting base and a wheel assembly having a wheel seat. The wheel assembly is mounted below the frame to provide a traveling function for the wheeled carrier. The wheel assembly generally includes wheels with a caster structure, to allow the wheels to rotate by 360 degrees horizontally, thereby enabling the wheeled carrier to turn flexibly.

To facilitate maneuverability in a confined space, a wheeled carrier with a drifting function already exists. That is, steering of the wheels of the wheeled carrier can be selectively locked or unlocked. A locking mechanism for locking steering of the wheels is generally arranged between the mounting base and the wheel seat, while an operating mechanism for operating locking or unlocking of the locking mechanism is generally arranged at a handle (also known as a push rod). In this way, a traction member such as a steel wire or a rope is generally required to achieve linkage between the operating mechanism and the locking mechanism. For a frame with a plurality of pivoting joints, the mounting of the traction member is relatively complex, and operational effectiveness is easily affected during use or pivoting. In addition, traditional wheel orientation mechanisms are not sufficiently effortless or convenient to operate.

### SUMMARY

An objective of the present disclosure is to provide an improved wheel orientation mechanism and a wheeled carrier having the wheel orientation mechanism, so that orientation of wheels is more efficient, labor-saving, and convenient.

In one aspect of the present disclosure, a wheel orientation mechanism arranged on a wheeled carrier is provided. The wheeled carrier includes a frame having a mounting base, and a wheel assembly having a wheel seat. The wheel seat is pivotally connected to the mounting base. The wheel orientation mechanism is configured to selectively restrict or allow rotation of the wheel seat relative to the mounting base. The wheel orientation mechanism includes a locking mechanism. The locking mechanism includes a locking assembly and a driving mechanism. The locking assembly is switchable between a locking state and an unlocking state. When in the locking state, the locking assembly restricts rotation of the wheel seat relative to the mounting base, and when in the unlocking state, the locking assembly allows rotation of the wheel seat relative to the mounting base. The driving mechanism includes a power unit and a driving assembly. The driving mechanism is configured to drive the locking assembly to switch the locking assembly between the locking state and the unlocking state.

According to some embodiments of the present disclosure, the wheel orientation mechanism further includes a control unit arranged separately from the driving mechanism and configured to be operable to send a control signal to the driving mechanism. The power unit is configured to receive the control signal, and operate based on the control signal to drive the locking assembly through the driving assembly.

According to some embodiments of the present disclosure, the control unit sends the control signal to the power unit in a wireless communication or wired communication manner.

According to some embodiments of the present disclosure, the control unit includes a micro switch and a first communication module electrically connected to the micro switch, when the micro switch is triggered, the first communication module sending the control signal. The power unit includes a second communication module configured to receive the control signal from the first communication module.

According to some embodiments of the present disclosure, the power unit includes a power device having an output shaft capable of selectively rotating in a clockwise direction or a counterclockwise direction. When the output shaft rotates in one of the clockwise direction and the counterclockwise direction, the locking assembly is adapted to be switched from the locking state to the unlocking state, and when the output shaft rotates in the other of the clockwise direction and the counterclockwise direction, the locking assembly is adapted to be switched from the unlocking state to the locking state.

According to some embodiments of the present disclosure, the driving assembly includes a first driving member secured to the output shaft and rotating with the output shaft. The first driving member abuts against the locking assembly, and when the first driving member rotates, the first driving member pushes the locking assembly to cause the locking assembly to slide.

According to some embodiments of the present disclosure, the first driving member has a lateral circumferential surface, and a first abutting surface and a second abutting surface are formed on the lateral circumferential surface, the second abutting surface being farther from the output shaft than the first abutting surface. Each of the first abutting surface and the second abutting surface is adapted to selectively abut against the locking assembly to switch the locking assembly between the locking state and the unlocking state.

According to some embodiments of the present disclosure, the first driving member has an end face facing away from the power device, and a first abutting platform and a second abutting platform are formed on the end face, the second abutting platform being farther from the power device than the first abutting platform. Each of the first abutting platform and the second abutting platform is adapted to selectively abut against the locking assembly to switch the locking assembly between the locking state and the unlocking state.

According to some embodiments of the present disclosure, the first driving member is in a form of a worm wheel with helical teeth formed on an outer peripheral surface. The locking assembly includes a worm portion, the worm portion being arranged orthogonally to the worm wheel, and spiral teeth adapted to be engaged with the helical teeth being formed on an outer peripheral surface of the worm portion. Through engagement transmission between the worm wheel and the worm portion, when rotating, the worm wheel is adapted to drive the locking assembly to rotate and cause the locking assembly to move linearly so as to be switched between the locking state and the unlocking state.

According to some embodiments of the present disclosure, the driving assembly includes: a second driving member drivingly connected to the output shaft; and a transmission member having an end connected to the second driving member and another end connected to the locking assembly. When the second driving member moves from a first position to a second position, the second driving member is adapted to drive the transmission member so as to switch the locking assembly from the locking state to the unlocking state, and when the second driving member returns from the second position to the first position, the second driving member is adapted to release the transmission member so as to switch the locking assembly from the unlocking state to the locking state.

According to some embodiments of the present disclosure, the second driving member is in a form of a rotating plate, and the second driving member selectively rotates in the clockwise direction or the counterclockwise direction with the output shaft. The transmission member is in a form of a traction member. When the second driving member rotates in one of the clockwise direction and the counterclockwise direction, the second driving member is adapted to pull the transmission member so as to switch the locking assembly from the locking state to the unlocking state, and when the second driving member rotates in the other of the clockwise direction and the counterclockwise direction, the second driving member is adapted to release the transmission member so as to switch the locking assembly from the unlocking state to the locking state.

According to some embodiments of the present disclosure, the second driving member is secured to the output shaft and rotates with the output shaft.

According to some embodiments of the present disclosure, the driving assembly further includes a transmission gear secured to the output shaft and rotating with the output shaft. The second driving member is drivingly connected to the transmission gear and arranged orthogonally to the transmission gear, and when rotating, the transmission gear is adapted to drive the second driving member to rotate.

According to some embodiments of the present disclosure, the power unit further includes: a second circuit board configured to detect a load current of the power device and determine, based on the load current, whether the locking assembly is in the locking state or the unlocking state.

According to some embodiments of the present disclosure, the locking assembly includes a locking member movable between an extended position and a retracted position, when the locking member is at the extended position, the locking assembly is in the locking state, and when the locking member is at the retracted position, the locking assembly is in the unlocking state.

In another aspect of the present disclosure, a wheeled carrier is provided, including the wheel orientation mechanism according to the above aspect, the driving mechanism being arranged in one of the mounting base and the wheel seat, and the locking assembly is slidably arranged between the mounting base and the wheel seat.

According to some embodiments of the present disclosure, the locking assembly is slidable in a vertical direction under the drive of the driving mechanism.

According to some embodiments of the present disclosure, the locking assembly is slidable in a horizontal direction under the drive of the driving mechanism.

### BRIEF DESCRIPTION OF THE DRAWINGS

Features and advantages of the present disclosure will be better understood through the following detailed description of exemplary embodiments utilizing the principles of the present disclosure with reference to the accompanying drawings:
FIG. 1 illustrates a wheeled carrier according to an embodiment of the present disclosure;
FIG. 2 is an enlarged view of Region A in FIG. 1;
FIG. 3 is an enlarged view of Region B in FIG. 1;
FIG. 4 is an exploded view of some components of the structure shown in FIG. 3;
FIG. 5 is a block diagram schematically illustrating a principle of controlling a driving mechanism by a control unit according to an embodiment of the present disclosure;
FIG. 6 is a partial cross-sectional view in a U1-U1 direction in FIG. 2, in which a locking assembly is in an unlocking state;
FIG. 7 is a partial cross-sectional view of the locking assembly in FIG. 6 in a locking state;
FIG. 8 is a schematic diagram of the locking assembly according to an embodiment of the present disclosure;
FIG. 9 is a partial cross-sectional view of a locking mechanism according to another embodiment of the present disclosure, in which the locking assembly is in the unlocking state;
FIG. 10 is a partial cross-sectional view of the locking assembly in FIG. 9 in the locking state;
FIG. 11 is a partial cross-sectional view of the locking mechanism according to yet another embodiment of the present disclosure, in which the locking assembly is in the unlocking state;
FIG. 12 is a partial cross-sectional view of the locking assembly in FIG. 11 in a locking state;
FIG. 13 is a schematic diagram of the locking mechanism according to a further embodiment of the present disclosure;
FIG. 14 is a partial cross-sectional view of the locking mechanism according to a further embodiment of the present disclosure, in which the locking assembly is in the unlocking state;
FIG. 15 is a partial cross-sectional view of the locking assembly in FIG. 14 in the locking state;
FIG. 16 is an exploded view of some components of the structure shown in FIG. 14;
FIG. 17 is a partial cross-sectional view of the locking mechanism according to a further embodiment of the present disclosure, in which the locking assembly is in the locking state;
FIG. 18 is a partial cross-sectional view of the locking assembly in FIG. 14 in the unlocking state;
FIG. 19 is a partial cross-sectional view of the locking mechanism according to a further embodiment of the present disclosure; and
FIG. 20 is a schematic structural diagram of a power device and a driving assembly in FIG. 19.

Description of reference numerals:
1000: wheeled carrier;
1100: frame; 1110: handle; 1111: handlebar portion; 1112: handlebar cover; 1113: window; 1120: front leg frame; 1130: rear leg frame; 1140: mounting base; 1141: second locking hole; 1142: lateral mounting portion; 1143: through hole; 1150: pivot shaft;
1210: first wheel assembly; 1220: second wheel assembly; 1221: wheel seat; 1222: wheel; 1224: first locking hole;
2000: control unit; 2100: button; 2200: micro switch; 2300: first circuit board; 2400: first communication module; 2500: first processor; 2600: first power supply module;
3000: power unit; 3100: second circuit board; 3200: second communication module; 3300: power device; 3310: output shaft; 3400: second processor; 3500: second power supply module;
4000: driving assembly; 4100: first driving member; 4110: lateral circumferential surface; 4111: first abutting surface; 4112: second abutting surface; 4120: end face; 4121: first abutting platform; 4122: second abutting platform; 4123: abutting ramp; 4200: second driving member; 4300: transmission member; 4400: transmission gear;
5000: locking assembly; 5110: locking member; 5111: pin; 5120: fixed seat; 5130: pushing member; 5131: limit hole; 5140: first elastic member; 5150: second elastic member; 5160: third elastic member.

### DETAILED DESCRIPTION

Various aspects of the present disclosure will be described in the following description. For the purpose of explanation, specific details are set forth in order to provide a thorough understanding of the present disclosure. It will be apparent to those skilled in the art that other embodiments of the present disclosure differ in detail without affecting the essence thereof. Therefore, the present disclosure is not limited by the content illustrated in the drawings and described in the specification, but only as indicated in the appended claims, with the proper scope of the present disclosure determined only by the broadest interpretation of the claims.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present.

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements, these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present invention. Herein, "a plurality of" means at least two, such as two or three, unless otherwise explicitly and specifically defined.

A wheeled carrier provided in the present disclosure is described below using a baby stroller as an example. The baby stroller includes, but is not limited to, a sit-type stroller, a lie-type stroller, a sit-and-lie convertible stroller, and the like. It should be understood that the wheeled carrier provided in the present disclosure may also be implemented as another wheeled carrier such as a pet stroller or a trolley.

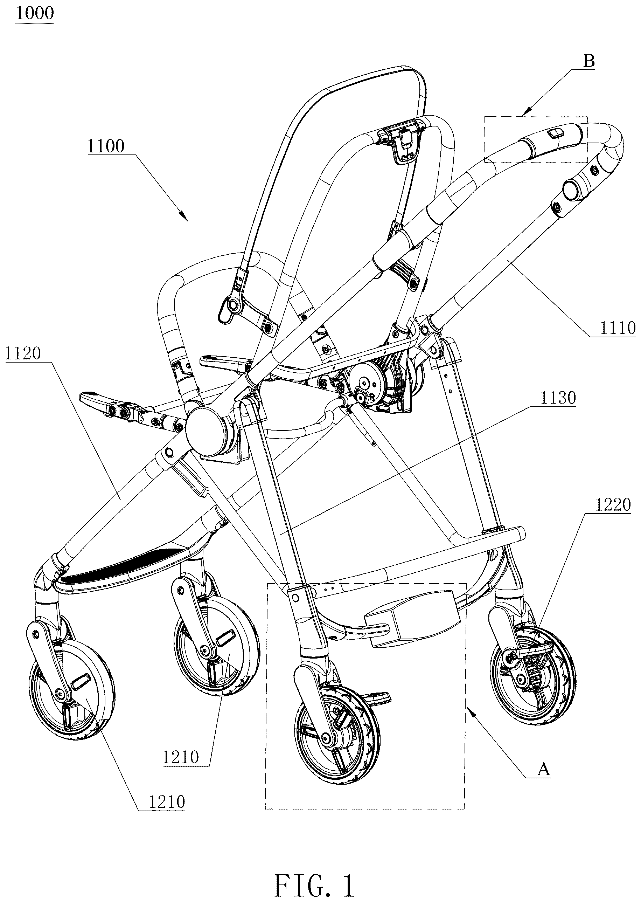

FIG. 1 illustrates a wheeled carrier 1000 according to an embodiment of the present disclosure. The wheeled carrier 1000 includes a frame 1100 and a wheel assembly mounted below the frame 1100. The frame 1100 has a handle 1110, a front leg frame 1120, and a rear leg frame 1130 connected to each other. Each of the front leg frame 1120 and the rear leg frame 1130 includes two side sections symmetrically arranged on two opposite sides of the frame 1100. The wheel assembly includes first wheel assemblies 1210 respectively mounted on lower ends of the two side sections of the front leg frame 1120, and second wheel assemblies 1220 respectively mounted on lower ends of the two side sections of the rear leg frame 1130. The two first wheel assemblies 1210 may have a same configuration, and the two second wheel assemblies 1220 may also have a same configuration. At least one of the two first wheel assemblies 1210 may have a braking mechanism. It should be understood that the frame 1100 shown in FIG. 1 is merely exemplary. In some other embodiments, the front leg frame 1120 may be a single section. That is, only one first wheel assembly 1210 may be mounted at a front end of the frame 1100. Alternatively, in some other embodiments, the rear leg frame 1130 may be a single section. That is, only one second wheel assembly 1220 may be mounted at a rear end of the frame 1100. Certainly, the frame 1100 may alternatively be in other forms not including a separate front leg frame 1120 or rear leg frame 1130, as long as the wheel assembly can be mounted on the frame 1100.

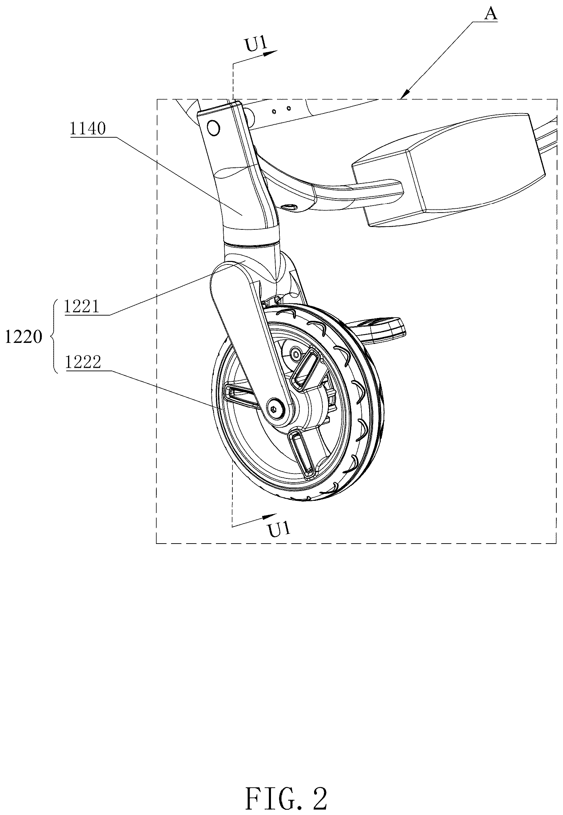

Referring to FIG. 2, a lower end of the rear leg frame 1130 is provided with a mounting base 1140. The second wheel assembly 1220 includes a wheel seat 1221 and a wheel 1222. The wheel 1222 is rotatably connected to the wheel seat 1221. The wheel seat 1221 is pivotally connected to the mounting base 1140. Through the rotation of the wheel seat 1221 relative to the mounting base 1140, a rolling direction of the wheel 1222 can be changed. In particular, the wheel seat 1221 is configured to be rotatable horizontally by 360 degrees relative to the mounting base 1140, enabling the wheel 1222 to roll in any direction. The first wheel assembly 1210 may have a similar configuration to the second wheel assembly 1220 and be connected to the front leg frame 1120 in a similar manner. Details are not described herein again.

The present disclosure provides a wheel orientation mechanism. The wheel orientation mechanism is configured to selectively restrict or allow rotation of the wheel seat 1221 relative to the mounting base 1140. The wheel orientation mechanism includes a locking mechanism and a control unit that will be described in detail below. The locking mechanism includes a locking assembly and a driving mechanism. The locking assembly is switchable between a locking state and an unlocking state. When in the locking state, the locking assembly restricts the rotation of the wheel seat 1221 relative to the mounting base 1140, and when in the unlocking state, the locking assembly allows the rotation of the wheel seat 1221 relative to the mounting base 1140. The driving mechanism includes a power unit and a driving assembly. The driving mechanism is configured to drive the locking assembly to switch the locking assembly between the locking state and the unlocking state. The control unit is arranged separately from the driving mechanism and is configured to be operable to send a control signal to the driving mechanism. The power unit is configured to receive the control signal, and operate based on the control signal to drive the locking assembly through the driving assembly. In the present disclosure, the power unit drives the driving assembly and then drives the locking assembly to complete locking and unlocking of wheel orientation, more precise control and faster response can be achieved, thereby ensuring more effective wheel orientation. In addition, a user operates the control unit, which is positioned away from the driving mechanism and can be arranged at any suitable position, to control the operation of the power unit, thereby making the operation more convenient, flexible, and labor-saving.

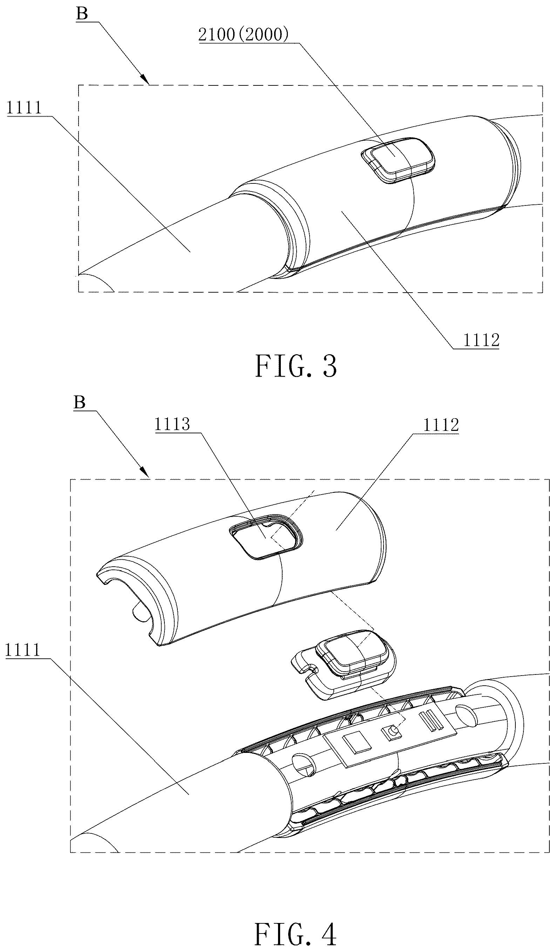

The wheel orientation mechanism provided in the present disclosure may be applied to any wheeled carrier. For ease of description, the following description is provided still by using the wheeled carrier 1000 shown in FIG. 1 as an example. Referring to FIG. 1, FIG. 3, and FIG. 4, a control unit 2000 is arranged on a handle 1110, particularly on a handlebar portion 1111 of the handle 1110. The handlebar portion 1111 is provided with a handlebar cover 1112. The handlebar cover 1112 is provided with a window 1113. Part of the control unit 2000 is exposed from the window 1113 for the user to press. The control unit 2000 includes, for example, a button 2100. The button 2100 is, for example, in a form of a mechanical button, which may be exposed from the window 1113. The arrangement of the control unit 2000 on the handle 1110 can facilitate the operation of the user. It should be understood that the control unit 2000 may be arranged at another position of the frame 1100 according to an application requirement. The control unit 2000 may communicate with the power unit of the wheel orientation mechanism in a wireless or wired manner. For example, the control unit 2000 may send the control signal to the power unit in a wireless communication or wired communication manner.

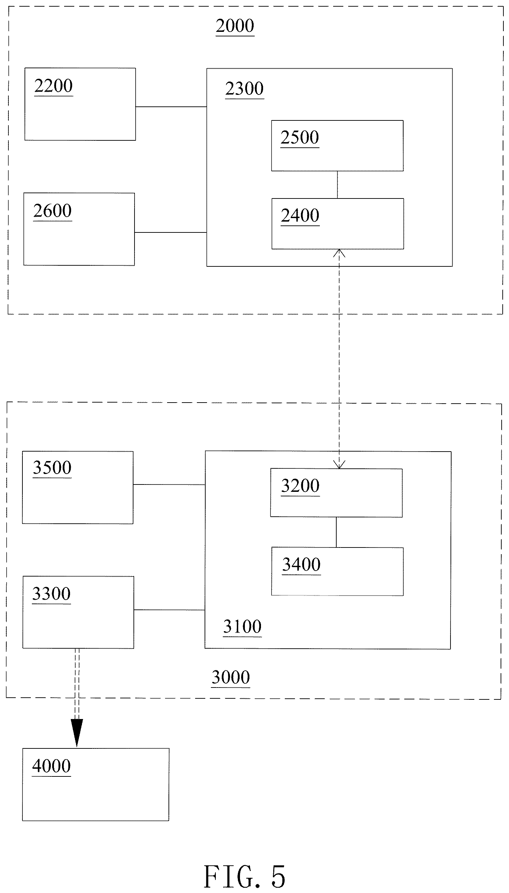

FIG. 5 schematically illustrates the control unit according to an embodiment of the present disclosure. The control unit 2000 includes, for example, a micro switch 2200 and a first circuit board 2300. The micro switch 2200 is arranged on the first circuit board 2300 and is electrically connected to the first circuit board 2300. When the control unit 2000 is operated by the user, the micro switch 2200 may be triggered. The triggering of the micro switch 2200 means that, under the action of an external force, the micro switch 2200 causes a change in a position of an actuating leaf spring thereof, thereby generating a predetermined electrical signal.

In an embodiment of the present disclosure, the control unit 2000 includes a first communication module 2400, and the first communication module 2400 is arranged on the first circuit board 2300 and is electrically connected to the micro switch 2200 via the first circuit board 2300. A power unit 3000 of the driving mechanism includes a second circuit board 3100. The second circuit board 3100 is provided with a second communication module 3200. The first communication module 2400 and the second communication module 3200 may communicate in a wireless or wired manner. For example, when the micro switch 2200 is triggered, the first communication module 2400 sends the control signal, and the second communication module 3200 receives the control signal from the first communication module 2400 in a wireless or wired manner. Specifically, the first communication module 2400 and the second communication module 3200 may implement wireless communication through an infrared technology, a Bluetooth technology, a Wi-Fi technology, a ZigBee technology, or the like. For example, when the communication between the first communication module 2400 and the second communication module 3200 is implemented by using the infrared technology, the first communication module 2400 may be in a form of an infrared transmitter, and the second communication module 3200 may be in a form of an infrared receiver. The first communication module 2400 sends the control signal to the second communication module 3200 in the form of an infrared light signal. According to an application requirement, the first communication module 2400 may alternatively be configured to receive information from the second communication module 3200. In this case, the first communication module 2400 and the second communication module 3200 may be in forms of infrared transceivers, respectively.

In an embodiment of the present disclosure, the first circuit board 2300 may include a first processor 2500, and the first processor 2500 is configured to receive the electrical signal from the micro switch 2200 and generate a control signal based on the electrical signal. The second circuit board 3100 may include a second processor 3400. The second processor 3400 is configured to receive the control signal from the second communication module 3200. When the first communication module 2400 and the second communication module 3200 communicate by using the infrared technology, the first circuit board 2300 includes an encoding circuit. The control signal encoded by the encoding circuit is sent by the first communication module 2400 to the second communication module 3200 in the form of an infrared light signal. The second circuit board 3100 includes a decoding circuit. The control signal received by the second communication module 3200 is decoded by the decoding circuit and then transmitted to the second processor 3400.

The power unit 3000 includes a power device 3300 electrically connected to the second circuit board 3100. The power device 3300 is configured to output power to a driving assembly 4000 of the driving mechanism. When the second communication module 3200 receives the control signal from the first communication module 2400, the second processor 3400 is adapted to control the operation of the power device 3300 based on the control signal. As a result, the power device 3300 can drive the driving assembly 4000 to achieve a predetermined motion, to switch the locking assembly between the locking state and the unlocking state.

In an embodiment of the present disclosure, the second circuit board 3100 may also be configured to detect a load current of the power device 3300, determine, based on the load current, whether the locking assembly is in the locking state or the unlocking state, and transmit a determination signal from the second communication module 3200 to the first communication module 2400 by the second processor 3400, serving as an auxiliary determination signal for the control signal of the first circuit board 2300, or provided to the user in another manner to inform the user of a usage status of the locking assembly.

In an embodiment of the present disclosure, in particular, the second circuit board 3100 may determine, by detecting a waveform change in the load current of the power device 3300, whether the locking assembly is in the locking state or the unlocking state, and transmit a determination signal from the second communication module 3200 to the first communication module 2400 by the second processor 3400, serving as an auxiliary determination signal for the control signal of the first circuit board 2300, or provided to the user in another manner to inform the user of a usage status of the locking assembly.

In an embodiment of the present disclosure, in particular, the second circuit board 3100 may determine, by detecting a change in the position of the locking assembly relative to the wheel seat 1221 or the mounting base 1140, whether the locking assembly is in the locking state or the unlocking state, and transmit a determination signal from the second communication module 3200 to the first communication module 2400 by the second processor 3400, serving as an auxiliary determination signal for the control signal of the first circuit board 2300, or provided to the user in another manner to inform the user of a usage status of the locking assembly.

In an embodiment of the present disclosure, still referring to FIG. 5, the control unit 2000 further includes a first power supply module 2600, and the first power supply module 2600 is configured to supply power to at least the first circuit board 2300. The micro switch 2200 may receive power from the first power supply module 2600 via the first circuit board 2300, or may directly receive power from the first power supply module 2600. The power unit 3000 further includes a second power supply module 3500, and the second power supply module 3500 is configured to supply power to at least the second circuit board 3100. The power device 3300 may receive power from the second power supply module 3500 via the second circuit board 3100, or may directly receive power from the second power supply module 3500. Each of the first power supply module 2600 and the second power supply module 3500 may be in a form of a disposable battery such as a zinc-carbon battery, a zinc-chloride battery, an alkaline battery, a nickel-cadmium battery, a nickel-metal hydride battery, or a lead-acid battery, or may be in a form of a rechargeable battery such as a lithium-ion battery, a nickel-cadmium battery, a nickel-metal hydride battery, or a lithium polymer battery.

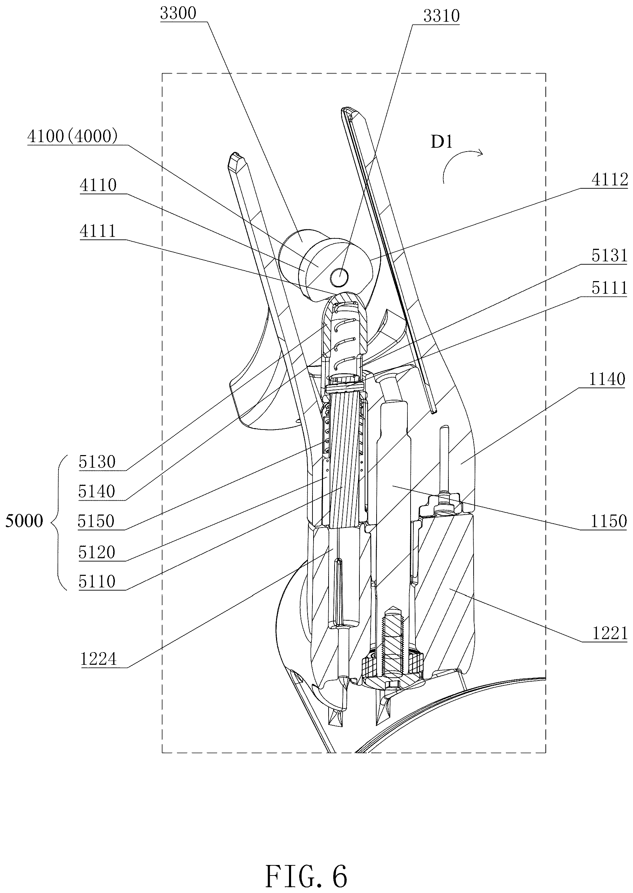

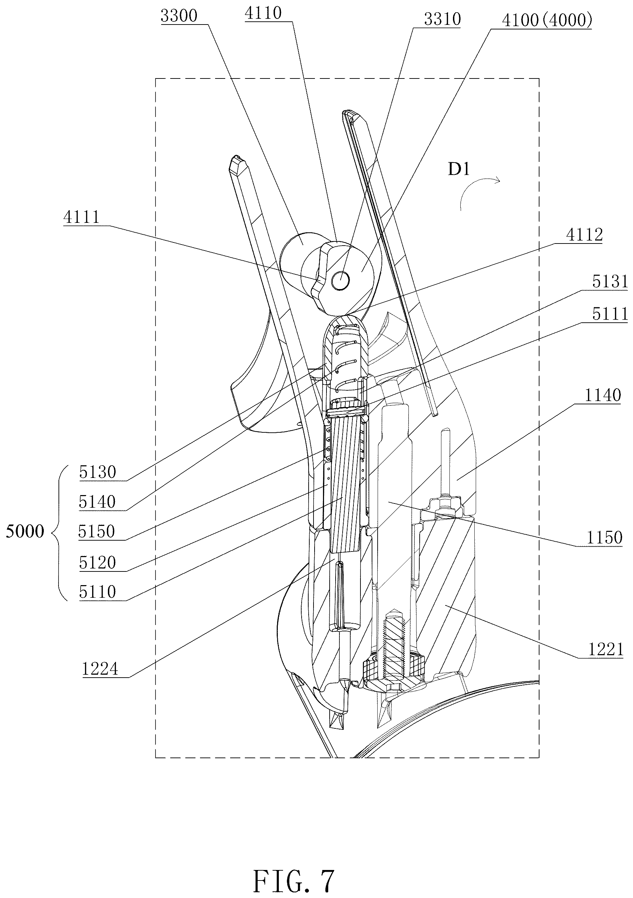

As shown in FIG. 6 and FIG. 7, the wheel seat 1221 is pivotally connected to the mounting base 1140 via a pivot shaft 1150. The pivot shaft 1150 extends in a vertical direction. That is, an axial direction of the pivot shaft 1150 is parallel to the vertical direction, enabling the wheel seat 1221 to rotate by 360 degrees horizontally around the pivot shaft 1150. The locking assembly 5000 is slidably arranged between the mounting base 1140 and the wheel seat 1221. When the locking assembly 5000 is in the locking state, the wheel seat 1221 cannot rotate relative to the mounting base 1140. The wheel seat 1221 can rotate relative to the mounting base 1140 only when the locking assembly 5000 is in the unlocking state.

The driving mechanism configured to drive the locking assembly 5000 to be switched between the locking state and the unlocking state may be arranged in either of the mounting base 1140 and the wheel seat 1221. The locking assembly 5000 may be configured to be slidable in a vertical direction under the drive of the driving mechanism, and may also be configured to be slidable in a horizontal direction under the drive of the driving mechanism. In the embodiments shown in FIG. 6 and FIG. 7, the driving mechanism is arranged in the mounting base 1140, and the locking assembly 5000 is configured to be slidable in the vertical direction under the drive of the driving mechanism.

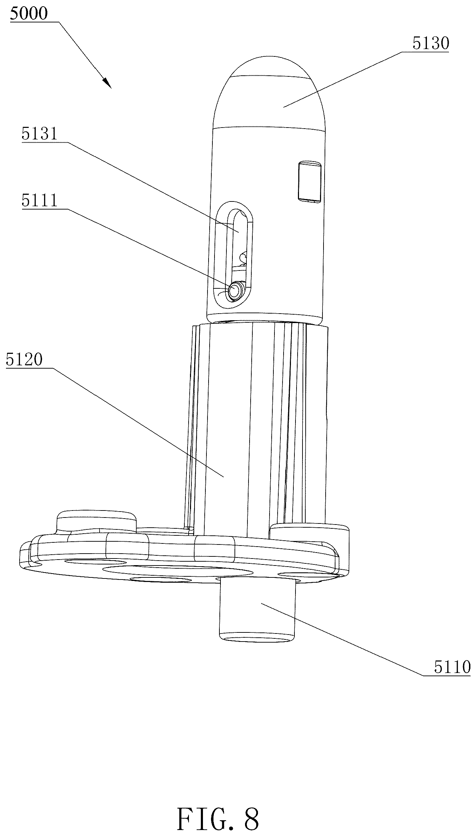

In an embodiment of the present disclosure, the locking assembly 5000 includes a locking member 5110, and the locking member 5110 is movable between an extended position and a retracted position. When the locking member 5110 is at the extended position, the locking assembly 5000 is in the locking state, and when the locking member 5110 is at the retracted position, the locking assembly 5000 is in the unlocking state. Specifically, referring to FIG. 8 together, the locking assembly 5000 further includes a fixed seat 5120, and the locking member 5110 is slidably arranged in the fixed seat 5120. The fixed seat 5120 is mounted on the mounting base 1140, and the locking member 5110 is adapted to be extended from the fixed seat 5120 in a direction towards the wheel seat 1221 and to be retracted into the fixed seat 5120 in a direction away from the wheel seat 1221. An end face of the wheel seat 1221 facing the mounting base 1140 is provided with at least one first locking hole 1224. When the locking member 5110 is at the extended position, the locking member 5110 is adapted to be inserted into the first locking hole 1224, as shown in FIG. 7, thereby preventing the rotation of the wheel seat 1221 relative to the mounting base 1140. When the locking member 5110 is at the retracted position, the locking member 5110 is adapted to be withdrawn from the first locking hole 1224, as shown in FIG. 6, thereby allowing the rotation of the wheel seat 1221 relative to the mounting base 1140.

Specifically, referring to FIG. 6 to FIG. 8, in an embodiment of the present disclosure, the locking assembly 5000 further includes a pushing member 5130, a first end of the locking member 5110 is slidably arranged in the pushing member 5130, and a second end of the locking member 5110 is extendable relative to the fixed seat 5120. When moving in a direction parallel to the axial direction of the pivot shaft 1150 (corresponding to the vertical direction), the pushing member 5130 may drive the locking member 5110 to move in the direction parallel to the axial direction of the pivot shaft 1150. For example, when moving towards the wheel seat 1221, the pushing member 5130 drives the locking member 5110 to also move towards the wheel seat 1221, enabling the second end of the locking member 5110 to extend from the fixed seat 5120 and be inserted into the first locking hole 1224. When moving away from the wheel seat 1221, the pushing member 5130 drives the locking member 5110 to also move away from the wheel seat 1221, enabling the second end of the locking member 5110 to be withdraw from the first locking hole 1224 and retract into the fixed seat 5120.

Two opposite ends of the pushing member 5130 are provided with limit holes 5131. The limit holes 5131 are elongated slot holes extending along a sliding path of the locking member 5110. The first end of the locking member 5110 is provided with a pin 5111. The pin 5111 extends through the first end of the locking member 5110, and two ends of the pin 5111 are respectively slidably embedded into the limiting holes 5131. A first elastic member 5140 is arranged between the locking member 5110 and the pushing member 5130, and a second elastic member 5150 is arranged between the pushing member 5130 and the fixed seat 5120. An elastic force of the first elastic member 5140 is greater than that of the second elastic member 5150. Each of the first elastic member 5140 and the second elastic member 5150 may be in a form of a compression spring, a tension spring, a wave spring, a torsion spring, or any other suitable type of spring. Similarly, other elastic members described below may adopt a tension spring, a wave spring, a torsion spring, or any other suitable type of spring. Details are not described again.

When the pushing member 5130 is pushed towards the wheel seat 1221, the pushing member 5130 is adapted to overcome the elastic force of the second elastic member 5150 and move towards the wheel seat 1221. During the movement of the pushing member 5130 towards the wheel seat 1221, the first elastic member 5140 is adapted to push the locking member 5110 to also move towards the wheel seat 1221. When the second end of the locking member 5110 is aligned with the first locking hole 1224, the second end of the locking member 5110 can be inserted into the first locking hole 1224. It may be understood that, due to rotation of the wheel seat 1221 relative to the mounting base 1140, the wheel seat 1221 may be in any horizontal direction relative to the mounting base 1140. As a result, there exists a situation where the second end of the locking member 5110 is not aligned with the first locking hole 1224. In this case, the second end of the locking member 5110 is blocked by the end face of the wheel seat 1221 and cannot continue moving towards the wheel seat 1221. The sliding of the pin 5111 relative to the limit hole 5131 allows the pushing member 5130 to further move towards the wheel seat 1221. The first elastic element 5140 is compressed due to the further movement of the pushing member 5130 towards the wheel seat 1221. When the wheel seat 1221 is rotated to align the first locking hole 1224 with the second end of the locking member 5110, since the elastic force of the first elastic member 5140 is greater than that of the second elastic member 5150, elastic recovery of the first elastic member 5140 may drive the locking member 5110 to be inserted into the first locking hole 1224. As a result, the locking member 5110 is at the extended position as shown in FIG. 7, and accordingly, the locking assembly 5000 is in the locking state.

When the pushing force on the pushing member 5130 is withdrawn, elastic recovery of the second elastic member 5150 may drive the pushing member 5130 to move away from the wheel seat 1221. A pin 5111, which abuts against the limit hole 5131, moves along with the pushing member 5130, thereby driving the locking member 5110 to move away from the wheel seat 1221, so that the second end of the locking member 5110 is withdrawn from the first locking hole 1224 and retracted into the fixed seat 5120. As a result, the locking member 5110 is at the retracted position as shown in FIG. 6, and accordingly, the locking assembly 5000 is in the unlocking state.

It should be understood that the above only describes one example of the locking assembly 5000. In other embodiments, the locking assembly 5000 may adopt any suitable configuration known in the art, as long as the rotation of the wheel seat 1221 relative to the mounting base 1140 can be selectively restricted or allowed.

Still referring to FIG. 5, FIG. 6, and FIG. 7, in an embodiment of the present disclosure, the power unit 3000 includes a power device 3300 electrically connected to the second circuit board 3100, and the power device 3300 is configured to output power to the driving assembly 4000 of the driving mechanism. Specifically, the power device 3300 is in a form of a reduction motor, which has an output shaft 3310 that can rotate selectively in a clockwise direction or a counterclockwise direction. The reduction motor may be selected from a gear reduction motor, a planetary reduction motor, a micro reduction motor, and another type of reduction motor, which achieves an effect of speed reduction and torque amplification through an internal gear train or another transmission mechanism. When the output shaft 3310 rotates in one of the clockwise direction and the counterclockwise direction, the locking assembly 5000 is adapted to be switched from the locking state to the unlocking state. When the output shaft 3310 rotates in the other of the clockwise direction and the counterclockwise direction, the locking assembly 5000 is adapted to be switched from the unlocking state to the locking state. The second circuit board 3100 is configured to control, based on the control signal, whether the output shaft 3310 of the power device 3300 rotates in the clockwise direction or the counterclockwise direction. In particular, the second circuit board 3100 is further configured to control, based on the control signal, the output shaft 3310 of the power device 3300 to rotate by a predetermined angle or a predetermined number of revolutions in the clockwise direction or the counterclockwise direction.

Still referring to FIG. 6 and FIG. 7, in an embodiment of the present disclosure, the driving assembly 4000 includes a first driving member 4100, and the first driving member 4100 is secured to the output shaft 3310 and rotates with the output shaft 3310. For example, when the output shaft 3310 rotates clockwise, the first driving member 4100 also rotates clockwise. Conversely, when the output shaft 3310 rotates counterclockwise, the first driving member 4100 also rotates counterclockwise. In particular, the first driving member 4100 rotates synchronously with the output shaft 3310. The first driving member 4100 abuts against the locking assembly 5000, and when the first driving member 4100 rotates, the first driving member 4100 pushes the locking assembly 5000 to cause the locking assembly 5000 to slide. The power device 3300 is substantially arranged in a horizontal direction perpendicular to the vertical direction, so that an extension direction of the output shaft 3310 is substantially perpendicular to the vertical direction. As a result, the first driving member 4100 secured to the output shaft 3310 rotates substantially within a vertical plane. The first driving member 4100 has a lateral circumferential surface 4110, a first abutting surface 4111 and a second abutting surface 4112 are formed on the lateral circumferential surface 4110, and the second abutting surface 4112 is farther from the output shaft 3310 than the first abutting surface 4111. Each of the first abutting surface 4111 and the second abutting surface 4112 is adapted to selectively abut against the locking assembly 5000 to switch the locking assembly 5000 between the locking state and the unlocking state. For example, when the first abutting surface 4111 abuts against the locking assembly 5000, the locking assembly 5000 is in the unlocking state, and when the second abutting surface 4112 abuts against the locking assembly 5000, the locking assembly 5000 is in the locking state.

In an embodiment of the present disclosure, specifically, the lateral circumferential surface 4110 of the first driving member 4100 abuts against the pushing member 5130 of the locking assembly 5000. When the first driving member 4100 rotates, the first abutting surface 4111 and the second abutting surface 4112 formed on the lateral circumferential surface 4110 sequentially abut against the pushing member 5130. For example, when the first abutting surface 4111 abuts against the pushing member 5130, the locking assembly 5000 is in the unlocking state, as shown in FIG. 6. If the first driving member 4100 is rotated in the clockwise direction (i.e., a direction D1 in FIG. 6 and FIG. 7) until the second abutting surface 4112 abuts against the pushing member 5130, since the second abutting surface 4112 is farther from the output shaft 3310 than the first abutting surface 4111, that is, in a radial direction of the output shaft 3310, the second abutting surface 4112 protrudes more outward than the first abutting surface 4111, the second abutting surface 4112 may push the pushing member 5130 towards the wheel seat 1221, and the locking assembly 5000 may be switched from the unlocking state to the locking state, as shown in FIG. 7. When the second abutting surface 4112 abuts against the pushing member 5130, if the first driving member 4100 is rotated in the counterclockwise direction (i.e., a direction opposite to the direction D1 in FIG. 6 and FIG. 7) until the first abutting surface 4111 abuts against the pushing member 5130, the locking assembly 5000 may be switched from the locking state to the unlocking state. The second circuit board 3100, particularly the second processor 3400 mounted on the second circuit board 3100, is adapted to control, based on the control signal, the output shaft 3310 of the power device 3300 to rotate by a predetermined angle in the clockwise direction or the counterclockwise direction, thereby causing one of the first abutting surface 4111 and the second abutting surface 4112 of the first driving member 4100 to selectively abut against the pushing member 5130.

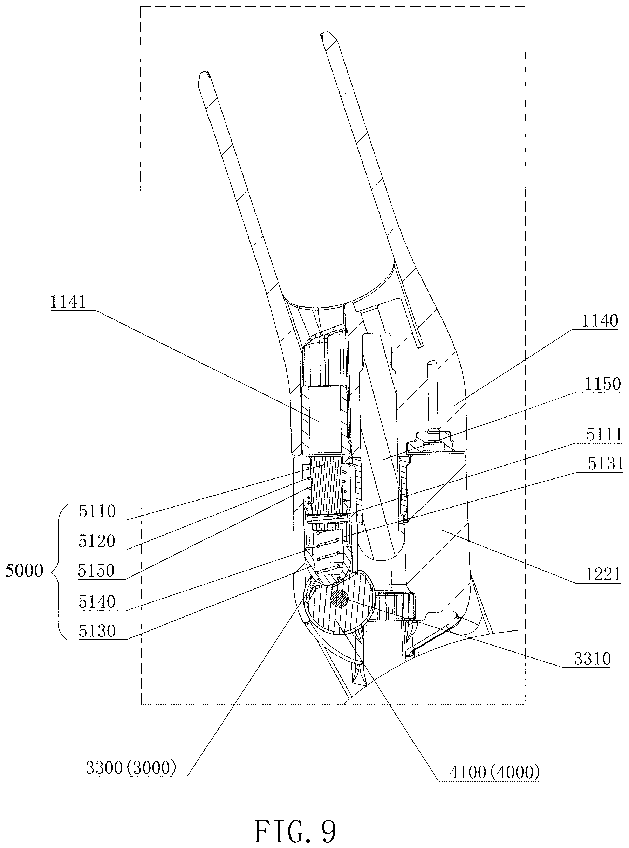

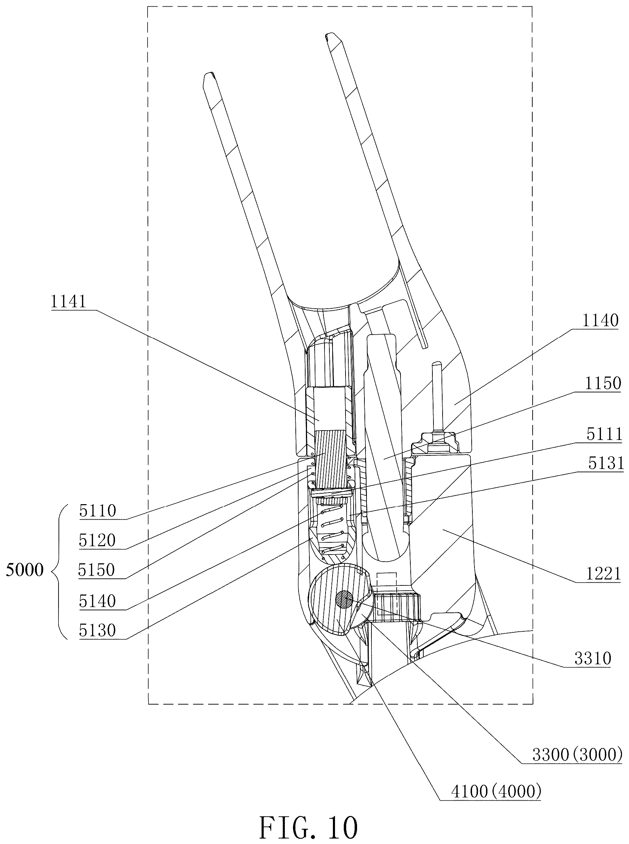

In the above embodiments, the driving mechanism is arranged in the mounting base 1140. In some other embodiments, the driving mechanism may be arranged in the wheel seat 1221. Referring to FIG. 9 and FIG. 10, the power unit 3000 and the driving assembly 4000 of the driving mechanism are arranged in the wheel seat 1221, and the locking member 5110 of the locking assembly 5000 is movable between the mounting base 1140 and the wheel seat 1221. An end face of the mounting base 1140 facing the wheel seat 1221 is provided with at least one second locking hole 1141. When the locking member 5110 is at the extended position, the locking member 5110 is adapted to be inserted into the second locking hole 1141, as shown in FIG. 10, thereby preventing the rotation of the wheel seat 1221 relative to the mounting base 1140. When the locking member 5110 is at the retracted position, the locking member 5110 is adapted to be withdrawn from the second locking hole 1141, as shown in FIG. 9, thereby allowing the rotation of the wheel seat 1221 relative to the mounting base 1140.

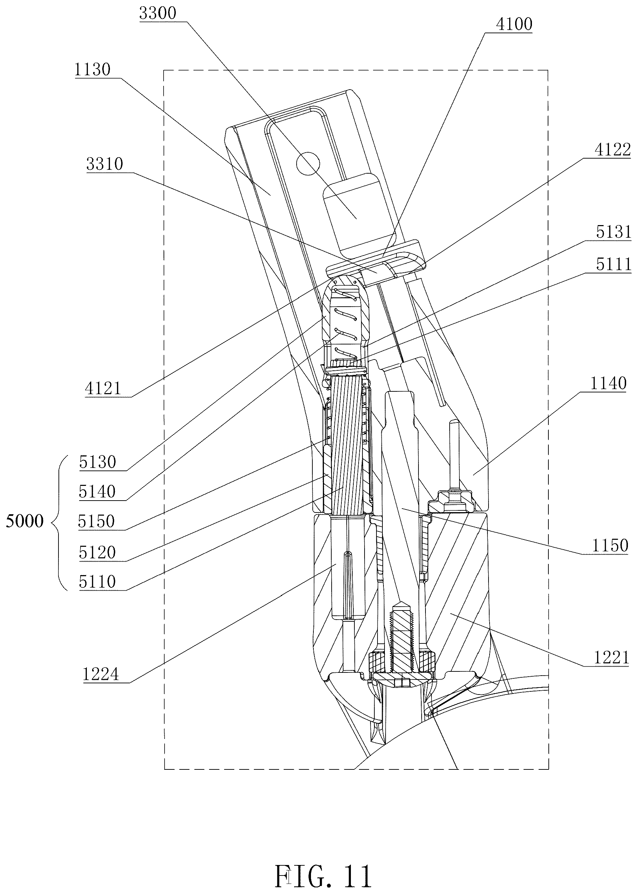

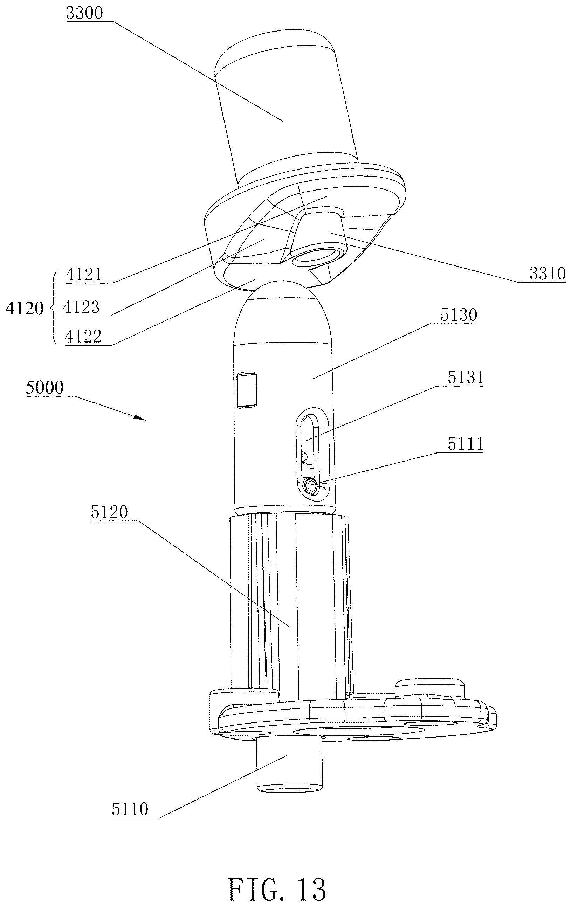

FIG. 11 to FIG. 13 illustrate the locking mechanism according to a further embodiment of the present disclosure. Differences between this embodiment and the above embodiments will be mainly described below, and content the same as or similar to those in the above embodiments will not be described in detail. The power device 3300 is substantially arranged in an extension direction of the lower end of the rear leg frame 1130, and an axial direction of the output shaft 3310 forms a certain angle with the vertical direction. As a result, the first driving member 4100 secured to the output shaft 3310 rotates substantially in a plane inclined relative to the vertical direction. The first driving member 4100 has an end face 4120 facing away from the power device 3300, a first abutting platform 4121 and a second abutting platform 4122 are formed on the end face 4120, and the second abutting platform 4122 is farther from the power device 3300 than the first abutting platform 4121. Each of the first abutting platform 4121 and the second abutting platform 4122 is adapted to selectively abut against the locking assembly 5000 to switch the locking assembly 5000 between the locking state and the unlocking state. For example, when the first abutting platform 4121 abuts against the locking assembly 5000, the locking assembly 5000 is in the unlocking state, and when the second abutting platform 4122 abuts against the locking assembly 5000, the locking assembly 5000 is in the locking state.

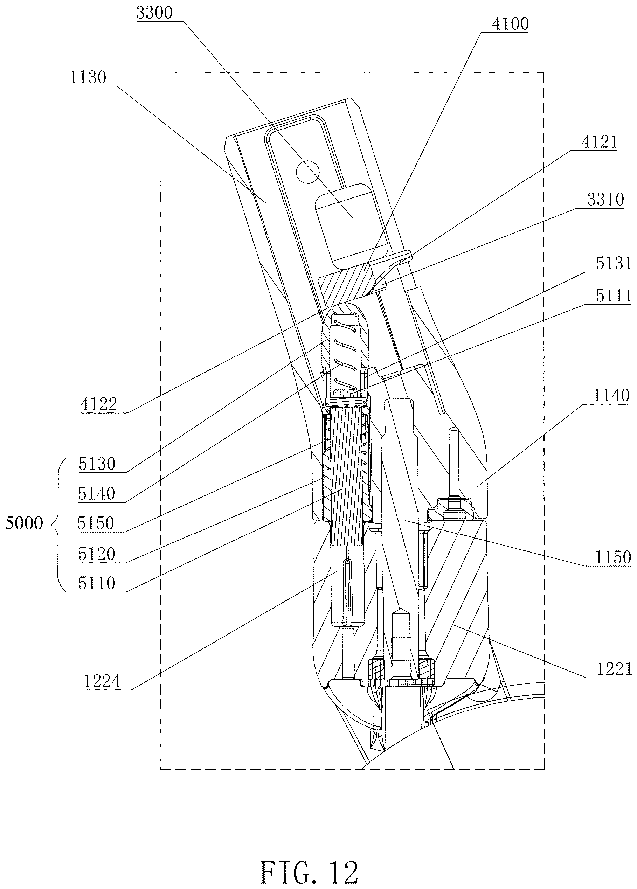

Specifically, the end face 4120 of the first driving member 4100 abuts against the pushing member 5130 of the locking assembly 5000. When the first driving member 4100 rotates, the first abutting platform 4121 and the second abutting platform 4122 formed on the end face 4120 sequentially abut against the pushing member 5130. An abutting ramp 4123 is formed between the first abutting platform 4121 and the second abutting platform 4122. Through the arrangement of the abutting ramp 4123, the abutment of the pushing member 5130 against the end face 4120 of the first driving member 4100 can smoothly transition between the first abutting platform 4121 and the second abutting platform 4122. When the first abutting platform 4121 abuts against the pushing member 5130, the locking assembly 5000 is in the unlocking state, as shown in FIG. 11. If the first driving member 4100 is rotated in the clockwise direction or the counterclockwise direction until the second abutting platform 4122 abuts against the pushing member 5130, since the second abutting platform 4122 is farther from the power device 3300 than the first abutting platform 4121, that is, in the axial direction of the output shaft 3310, the second abutting platform 4122 protrudes more outward than the first abutting platform 4121, the second abutting platform 4122 may push the pushing member 5130 towards the wheel seat 1221, and the locking assembly 5000 may be switched from the unlocking state to the locking state, as shown in FIG. 12. When the second abutting platform 4122 abuts against the pushing member 5130, if the first driving member 4100 is rotated in the clockwise direction or the counterclockwise direction until the first abutting platform 4121 abuts against the pushing member 5130, the locking assembly 5000 may be switched from the locking state to the unlocking state. The second circuit board 3100, particularly the second processor 3400 mounted on the second circuit board 3100, is adapted to control, based on the control signal, the output shaft 3310 of the power device 3300 to rotate by a predetermined angle in the clockwise direction or the counterclockwise direction, thereby causing one of the first abutting platform 4121 and the second abutting platform 4122 of the first driving member 4100 to selectively abut against the pushing member 5130.

In an embodiment of the present disclosure, the second circuit board 3100 is further configured to detect a load current of the power device 3300, and determine, based on the load current, whether the locking assembly 5000 is in the locking state or the unlocking state. For example, with reference to the embodiments described above, during the rotation of the output shaft 3310 of the power device 3300, the load current of the power device 3300 when the second abutting surface 4112 or the second abutting platform 4122 of the first driving member 4100 abuts against the pushing member 5130 is greater than the load current of the power device 3300 when the first abutting surface 4111 or the first abutting platform 4121 of the first driving member 4100 abuts against the pushing member 5130. That is, during the rotation of the first driving member 4100 from a position where the first abutting surface 4111 or the first abutting platform 4121 abuts against the pushing member 5130 to a position where the second abutting surface 4112 or the second abutting platform 4122 abuts against the pushing member 5130, the load current of the power device 3300 increases. When the second abutting surface 4112 or the second abutting platform 4122 keeps abutting against the pushing member 5130, the load current of the power device 3300 is in a stable state and has a relatively large value. During the rotation of the first driving member 4100 from the position where the second abutting surface 4112 or the second abutting platform 4122 abuts against the pushing member 5130 to the position where the first abutting surface 4111 or the first abutting platform 4121 abuts against the pushing member 5130, the load current of the power device 3300 decreases. When the first abutting surface 4111 or the first abutting platform 4121 keeps abutting against the pushing member 5130, the load current of the power device 3300 is in a stable state and has a relatively small value. The second circuit board 3100, by detecting a waveform change in the load current of the power device 3300, may determine whether the pushing member 5130 presently abuts against the first abutting surface 4111 or the first abutting platform 4121 or abuts against the second abutting surface 4112 or the second abutting platform 4122, thereby determining whether the locking assembly 5000 is in the unlocking state or the locking state.

In particular, the second processor 3400 arranged on the second circuit board 3100 can feed back a determination result of whether the locking assembly 5000 is in the unlocking state or the locking state to a central processing unit (not shown) arranged on the frame 1100. The central processing unit controls display of an indicator (not shown) based on the determination result. As a result, the user can intuitively determine whether the locking assembly 5000 is in the unlocking state or the locking state.

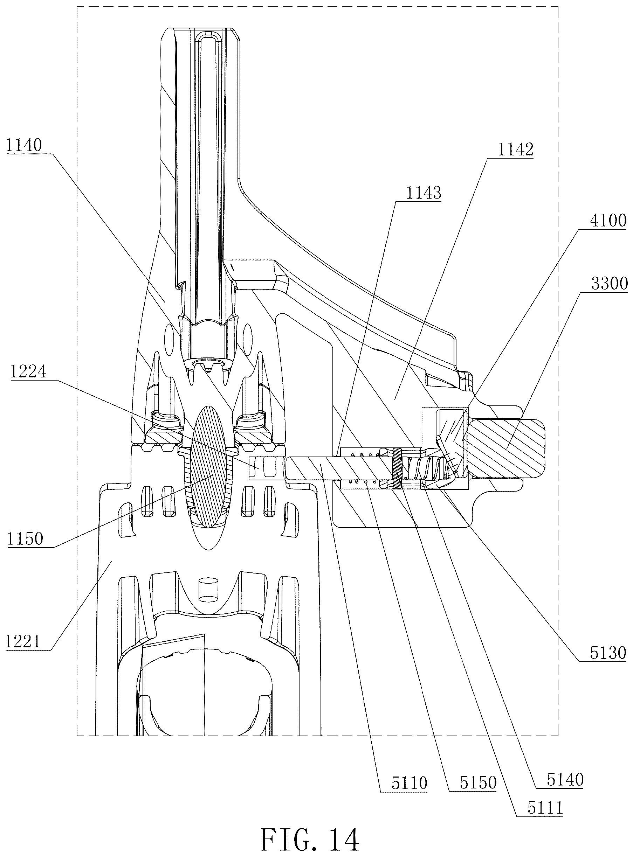

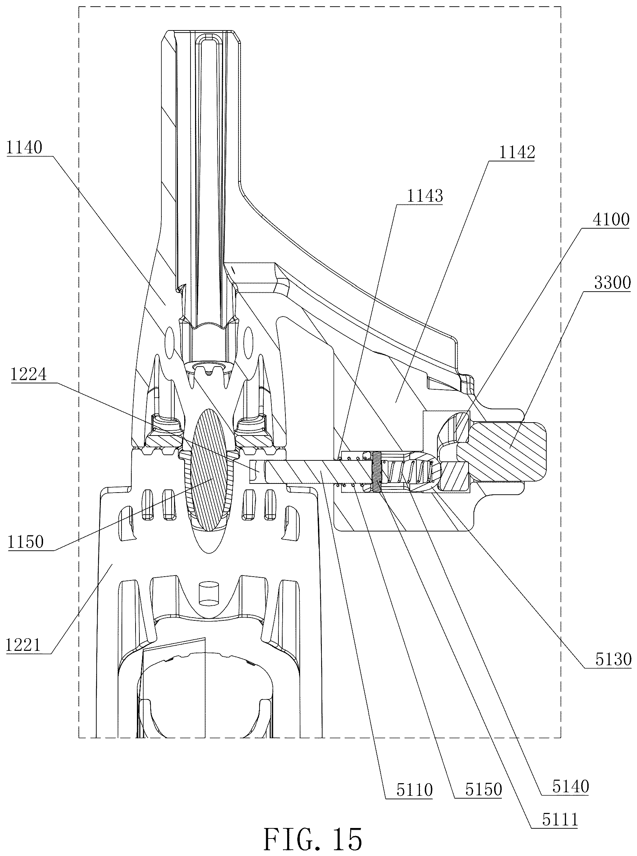

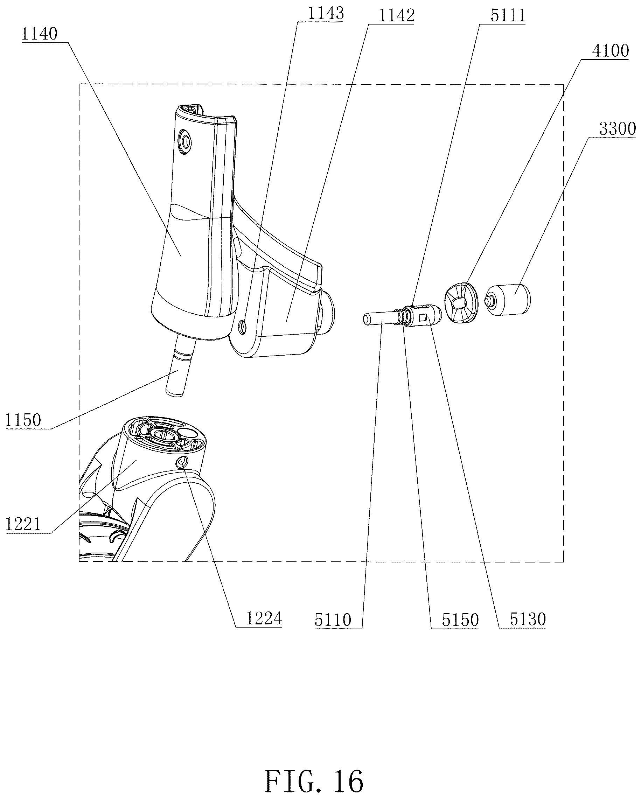

In the above embodiments, the locking assembly 5000 is configured to be slidable in the vertical direction under the drive of the driving mechanism. In some other embodiments, the locking assembly 5000 may be configured to be slidable in the horizontal direction under the drive of the driving mechanism. Referring to FIG. 14 to FIG. 16, the mounting base 1140 has a lateral mounting portion 1142, and the driving mechanism including the power device 3300 and the first driving member 4100 is arranged in the lateral mounting portion 1142. The locking assembly 5000 is also arranged on the lateral mounting portion 1142. The locking member 5110 of the locking assembly 5000 is movable between the lateral mounting portion 1142 and the wheel seat 1221. The lateral mounting portion 1142 is provided with a through hole 1143, and the locking member 5110 is retractably arranged in the through hole 1143. A side portion of the wheel seat 1221 is provided with at least one first locking hole 1224, and part of the locking member 5110 extending from the through hole 1143 is adapted to be inserted into the first locking hole 1224. Specifically, when the locking member 5110 is at the extended position, the locking member 5110 is adapted to be extended from the through hole 1143 and be inserted into the first locking hole 1224, as shown in FIG. 15, thereby preventing the rotation of the wheel seat 1221 relative to the mounting base 1140. When the locking member 5110 is at the retracted position, the locking member 5110 is adapted to be withdrawn from the first locking hole 1224, as shown in FIG. 14, thereby allowing the rotation of the wheel seat 1221 relative to the mounting base 1140.

In a further embodiment of the present disclosure, the first driving member 4100 is in a form of a worm wheel with helical teeth formed on an outer peripheral surface. The locking assembly 5000 includes a worm portion. The worm portion is arranged orthogonally to the worm wheel. Spiral teeth adapted to be engaged with the helical teeth are formed on an outer peripheral surface of the worm portion. Through engagement transmission between the worm wheel and the worm portion, when rotating, the worm wheel is adapted to drive the locking assembly 5000 to rotate and cause the locking assembly 5000 to move linearly so as to be switched between the locking state and the unlocking state.

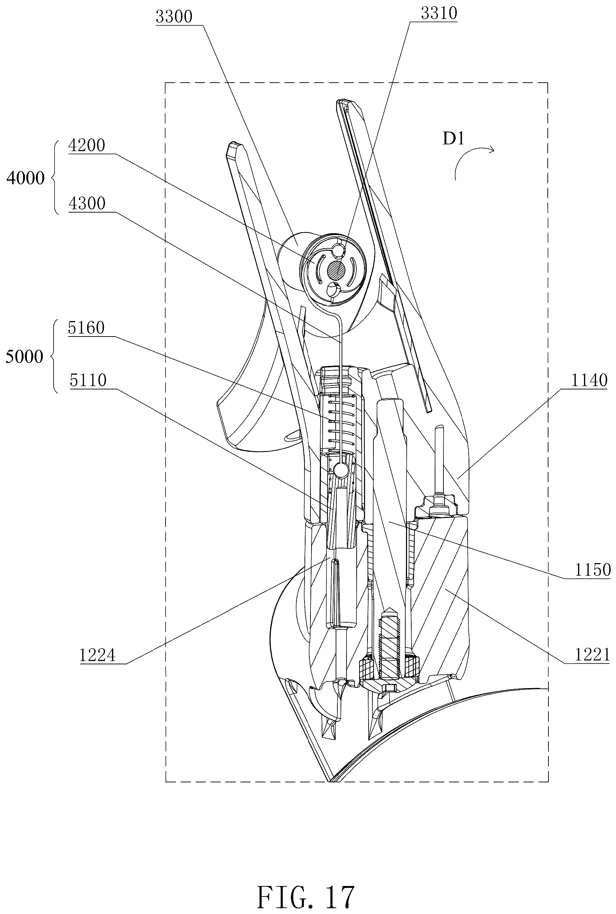

Referring to FIG. 17 to FIG. 20, in some embodiments of the present disclosure, the driving assembly 4000 does not include the first driving member 4100 abutting against the locking assembly 5000, but instead drives the locking member 5110 through a transmission member 4300 to cause the locking member 5110 to move. Specifically, the driving assembly 4000 includes a second driving member 4200 and the transmission member 4300. The second driving member 4200 is drivingly connected to the output shaft 3310 of the power device 3300. An end of the transmission member 4300 is connected to the second driving member 4200. Another end of the transmission member 4300 is connected to the locking assembly 5000. When the second driving member 4200 moves from a first position to a second position, the second driving member 4200 is adapted to drive the transmission member 4300 to switch the locking assembly 5000 from the locking state to the unlocking state. When the second driving member 4200 returns from the second position to the first position, the second driving member 4200 is adapted to release the transmission member 4300 so as to switch the locking assembly 5000 from the unlocking state to the locking state.

In an embodiment of the present disclosure, the second driving member 4200 may be in a form of a rotating plate and may selectively rotate in the clockwise direction or the counterclockwise direction with the output shaft 3310. The transmission member 4300 may be in a form of a traction member. The traction member may be selected from a traction wire (e.g., a steel wire), a traction rope, a traction rod, or another type of traction member. When the second driving member 4200 rotates in one of the clockwise direction and the counterclockwise direction, the second driving member 4200 is adapted to pull the transmission member 4300 so as to switch the locking assembly 5000 from the locking state to the unlocking state. When the second driving member 4200 rotates in the other of the clockwise direction and the counterclockwise direction, the second driving member 4200 is adapted to release the transmission member 4300 so as to switch the locking assembly 5000 from the unlocking state to the locking state.

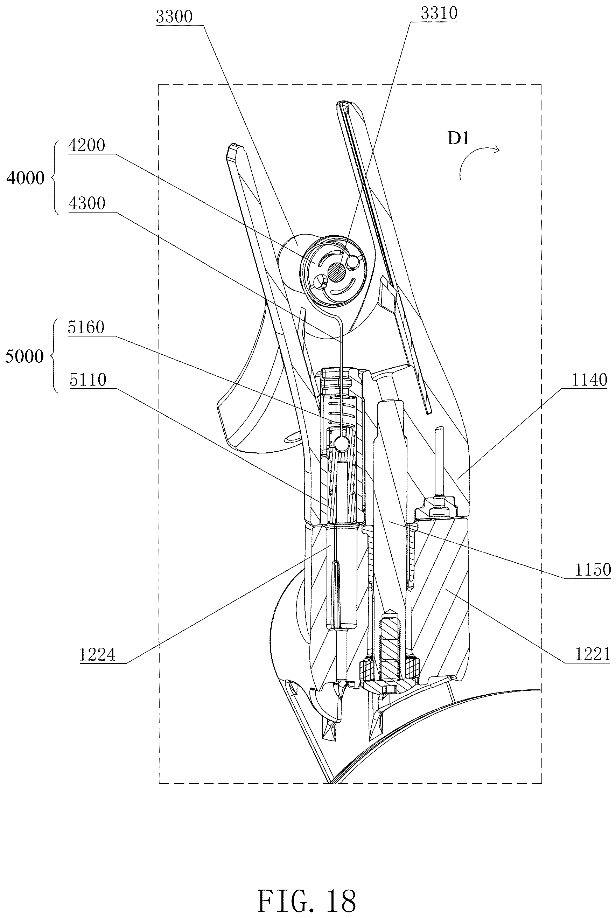

Referring to FIG. 17 and FIG. 18, in an embodiment of the present disclosure, the second driving member 4200 is secured to the output shaft 3310 and rotates with the output shaft 3310. The power device 3300 is substantially arranged in a horizontal direction perpendicular to the vertical direction, so that an extension direction of the output shaft 3310 is substantially perpendicular to the vertical direction. As a result, the second driving member 4200 secured to the output shaft 3310 rotates substantially within a vertical plane. When the second driving member 4200 rotates, the second driving member 4200 is adapted to pull the transmission member 4300. The locking assembly 5000 includes a locking member 5110 and a third elastic member 5160. The locking member 5110 is movable between the extended position and the retracted position. The transmission member 4300 is adapted to drive the locking member 5110 from the extended position to the retracted position. The third elastic member 5160 is configured to bias the transmission member 4300 towards the extended position.

Specifically, when the locking member 5110 is at the extended position shown in FIG. 17, the locking member 5110 is inserted into the first locking hole 1224. In this case, the wheel seat 1221 cannot rotate relative to the mounting base 1140. When the output shaft 3310 rotates in a clockwise direction (i.e., a direction D1 in FIG. 17 and FIG. 18) by a predetermined angle, the second driving member 4200 pulls the transmission member 4300. Under the drive of the transmission member 4300, the locking member 5110 is moved upwards in the vertical direction to the retracted position as shown in FIG. 18. In this case, the locking member 5110 is withdrawn from the first locking hole 1224, thereby allowing the rotation of the wheel seat 1221 relative to the mounting base 1140. When the output shaft 3310 rotates in a counterclockwise direction (i.e., a direction opposite to the direction D1 in FIG. 17 and FIG. 18) by a predetermined angle, the transmission member 4300 is released. Under the action of an elastic force of the third elastic member 5160, the locking member 5110 is moved from the retracted position to the extended position.

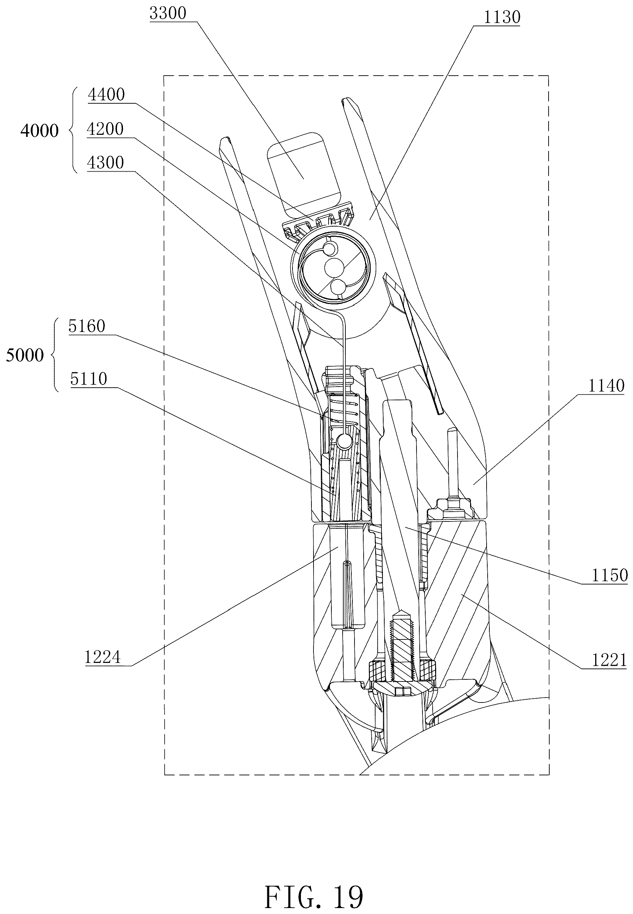

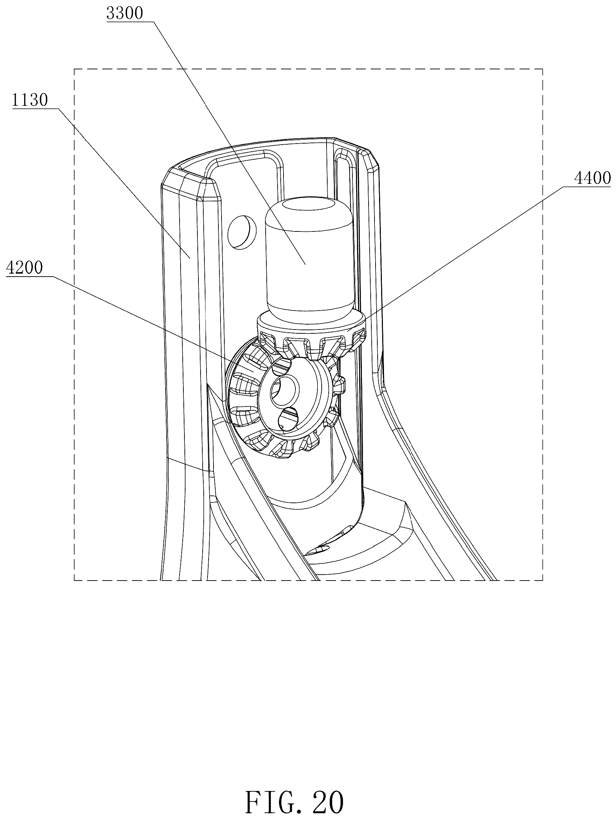

FIG. 19 to FIG. 20 illustrate the locking mechanism according to a further embodiment of the present disclosure. In this embodiment, the power unit 3000 and the locking assembly 5000 the same as those in the embodiment shown in FIG. 17 and FIG. 18 are adopted. A difference lies in different configuration of the driving assembly 4000. The locking mechanism in this embodiment can also be applied between the mounting base 1140 and the wheel seat 1221 in the embodiment shown in FIG. 17 and FIG. 18. Differences between this embodiment and the embodiment shown in FIG. 17 and FIG. 18 will be mainly described below, such as the mounting base 1140, the wheel seat 1221, the power unit 3000, the locking assembly 5000, the second driving member 4200, and the transmission member 4300 whose functions and configurations are identical or similar to those in the embodiment shown in FIG. 17 and FIG. 18. Referring to FIG. 19 and FIG. 20, the driving assembly 4000 includes a transmission gear 4400, a second driving member 4200, and a transmission member 4300. The transmission gear 4400 is secured to the output shaft 3310 and rotates with the output shaft 3310. The power device 3300 is substantially arranged in an extension direction of the lower end of the rear leg frame 1130, and an axial direction of the output shaft 3310 forms a certain angle with the vertical direction. As a result, the transmission gear 4400 secured to the output shaft 3310 rotates substantially in a plane inclined relative to the vertical direction. The second driving member 4200 is drivingly connected to the transmission gear 4400 and arranged orthogonally to the transmission gear 4400. When rotating, the transmission gear 4400 is adapted to drive the second driving member 4200 to rotate. Since the second driving member 4200 is arranged orthogonally to the transmission gear 4400, a rotation plane of the second driving member 4200 is perpendicular to that of the transmission gear 4400. In particular, both the transmission gear 4400 and the second driving member 4200 are in forms of bevel gears. Through gear engagement between the transmission gear 4400 and the second driving member 4200, transmission of rotational motion from the transmission gear 4400 to the second driving member 4200 is achieved.

Although various illustrative embodiments are described above, various modifications may be made to the embodiments without departing from the scope of the present disclosure as described in the claims. For example, optional features of various devices may be included in some embodiments, or may not be included in other embodiments. Therefore, the foregoing description is provided mainly for illustrative purposes and should not be construed as limiting the scope of the present disclosure as set forth in the claims.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A wheel orientation mechanism arranged on a wheeled carrier (1000), the wheeled carrier (1000) comprising a frame (1100) having a mounting base (1140), and a wheel assembly (1210, 1220) having a wheel seat (1221), the wheel seat (1221) being pivotally connected to the mounting base (1140), the wheel orientation mechanism being configured to selectively restrict or allow rotation of the wheel seat (1221) relative to the mounting base (1140), and the wheel orientation mechanism comprising:
a locking mechanism comprising:
a locking assembly (5000) switchable between a locking state and an unlocking state, when in the locking state, the locking assembly (5000) restricting the rotation of the wheel seat (1221) relative to the mounting base (1140), and when in the unlocking state, the locking assembly (5000) allowing the rotation of the wheel seat (1221) relative to the mounting base (1140); and
a driving mechanism comprising a power unit (3000) and a driving assembly (4000), the driving mechanism being configured to drive the locking assembly (5000) to switch the locking assembly (5000) between the locking state and the unlocking state.

2. The wheel orientation mechanism of claim 1, wherein:
the wheel orientation mechanism further comprises a control unit (2000) arranged separately from the driving mechanism and configured to be operable to send a control signal to the driving mechanism;
the power unit (3000) is configured to receive the control signal, and operate based on the control signal to drive the locking assembly (5000) through the driving assembly (4000); and
optionally wherein the control unit (2000) sends the control signal to the power unit (3000) in a wireless communication or wired communication manner.

3. The wheel orientation mechanism of claim 2, wherein:
the control unit (2000) comprises a micro switch (2200) and a first communication module (2400) electrically connected to the micro switch (2200), and when the micro switch (2200) is triggered, the first communication module (2400) sends the control signal; and
the power unit (3000) comprises a second communication module (3200) configured to receive the control signal from the first communication module (2400).

4. The wheel orientation mechanism of any one of claims 1 to 3, wherein:
the power unit (3000) comprises a power device (3300) having an output shaft (3310) capable of selectively rotating in a clockwise direction or a counterclockwise direction; and
when the output shaft (3310) rotates in one of the clockwise direction and the counterclockwise direction, the locking assembly (5000) is adapted to be switched from the locking state to the unlocking state, and when the output shaft (3310) rotates in the other of the clockwise direction and the counterclockwise direction, the locking assembly (5000) is adapted to be switched from the unlocking state to the locking state.

5. The wheel orientation mechanism of claim 4, wherein:
the driving assembly (4000) comprises a first driving member (4100) secured to the output shaft (3310) and rotating with the output shaft (3310); and
the first driving member (4100) abuts against the locking assembly (5000), and when the first driving member (4100) rotates, the first driving member (4100) pushes the locking assembly (5000) to cause the locking assembly (5000) to slide.

6. The wheel orientation mechanism of claim 5, wherein:
the first driving member (4100) has a lateral circumferential surface (4110), and a first abutting surface (4111) and a second abutting surface (4112) are formed on the lateral circumferential surface (4110), the second abutting surface (4112) being farther from the output shaft (3310) than the first abutting surface (4111); and
each of the first abutting surface (4111) and the second abutting surface (4112) is adapted to selectively abut against the locking assembly (5000) to switch the locking assembly (5000) between the locking state and the unlocking state.

7. The wheel orientation mechanism of claim 5, wherein:
the first driving member (4100) has an end face (4120) facing away from the power device (3300), and a first abutting platform (4121) and a second abutting platform (4122) are formed on the end face (4120), the second abutting platform (4122) being farther from the power device (3300) than the first abutting platform (4121); and
each of the first abutting platform (4121) and the second abutting platform (4122) is adapted to selectively abut against the locking assembly (5000) to switch the locking assembly (5000) between the locking state and the unlocking state.

8. The wheel orientation mechanism of claim 5, wherein:
the first driving member (4100) is in a form of a worm wheel with helical teeth formed on an outer peripheral surface thereof;
the locking assembly (5000) comprises a worm portion, the worm portion being arranged orthogonally to the worm wheel, and spiral teeth adapted to be engaged with the helical teeth being formed on an outer peripheral surface of the worm portion; and
through engagement transmission between the worm wheel and the worm portion, when rotating, the worm wheel is adapted to drive the locking assembly (5000) to rotate and cause the locking assembly (5000) to move linearly so as to be switched between the locking state and the unlocking state.

9. The wheel orientation mechanism of any one of claims 4 to 8, wherein the driving assembly (4000) comprises:
a second driving member (4200) drivingly connected to the output shaft (3310); and
a transmission member (4300) having an end connected to the second driving member (4200) and another end connected to the locking assembly (5000); and
wherein when the second driving member (4200) moves from a first position to a second position, the second driving member (4200) is adapted to drive the transmission member (4300) so as to switch the locking assembly (5000) from the locking state to the unlocking state, and when the second driving member (4200) returns from the second position to the first position, the second driving member (4200) is adapted to release the transmission member (4300) so as to switch the locking assembly (5000) from the unlocking state to the locking state.

10. The wheel orientation mechanism of claim 9, wherein:
the second driving member (4200) is in a form of a rotating plate, and the second driving member (4200) selectively rotates in the clockwise direction or the counterclockwise direction with the output shaft (3310);
the transmission member (4300) is in a form of a traction member;
when the second driving member (4200) rotates in one of the clockwise direction and the counterclockwise direction, the second driving member (4200) is adapted to pull the transmission member (4300) so as to switch the locking assembly (5000) from the locking state to the unlocking state, and when the second driving member (4200) rotates in the other of the clockwise direction and the counterclockwise direction, the second driving member (4200) is adapted to release the transmission member (4300) so as to switch the locking assembly (5000) from the unlocking state to the locking state; and
optionally wherein the second driving member (4200) is secured to the output shaft (3310) and rotates with the output shaft (3310).

11. The wheel orientation mechanism of claim 10, wherein:
the driving assembly (4000) further comprises a transmission gear (4400) secured to the output shaft (3310) and rotating with the output shaft (3310); and
the second driving member (4200) is drivingly connected to the transmission gear (4400) and arranged orthogonally to the transmission gear (4400), and when rotating, the transmission gear (4400) is adapted to drive the second driving member (4200) to rotate.

12. The wheel orientation mechanism of any one of claims 4 to 11, wherein the power unit (3000) further comprises:
a second circuit board (3100) configured to detect a load current of the power device (3300) and determine, based on the load current, whether the locking assembly (5000) is in the locking state or the unlocking state.

13. The wheel orientation mechanism of any one of claims 1 to 12, wherein the locking assembly (5000) comprises a locking member (5110) movable between an extended position and a retracted position, when the locking member (5110) is at the extended position, the locking assembly (5000) is in the locking state, and when the locking member (5110) is at the retracted position, the locking assembly (5000) is in the unlocking state.

14. A wheeled carrier (1000), comprising the wheel orientation mechanism of any one of claims 1 to 13, the driving mechanism being arranged in one of the mounting base (1140) and the wheel seat (1221), and the locking assembly (5000) is slidably arranged between the mounting base (1140) and the wheel seat (1221).

15. The wheeled carrier (1000) of claim 14, wherein the locking assembly (5000) is slidable in a vertical direction under the drive of the driving mechanism, or wherein the locking assembly (5000) is slidable in a horizontal direction under the drive of the driving mechanism.
